# FASCICULE DE BREVET EUROPEEN

(11) **EP 3 387 654 B1**
(45) Date de publication et mention de la délivrance du brevet: **10.03.2021**
(21) Numéro de dépôt: 16819140.1
(22) Date de dépôt: 30.11.2016
(51) Int. Cl.: H01B 7/295, H01B 3/14, C04B 28/00, C04B 28/04, C04B 28/26, H01B 3/00, H01B 3/30, H01B 13/14

(54) **CÂBLE RÉSISTANT AU FEU**
FEUERFESTES KABEL
FIRE-RESISTANT CABLE

(30) Priorité: 11.12.2015 FR 1562210
(43) Date de publication de la demande: 17.10.2018
(73) Titulaire: Nexans, 92400 Courbevoie (FR)
(72) Inventeur: AUVRAY, Thierry, 69006 Lyon (FR); GYPPAZ, Franck, 69003 Lyon (FR); POULARD, Corinne, 69530 Orlienas (FR)
(74) Mandataire: Ipsilon
(86) Numéro de dépôt international: PCT/FR2016/053144
(87) Numéro de publication internationale: WO 2017/098114

(56) Documents cités:
- CH-A- 352 717
- DE-A1- 2 105 096
- GB-A- 569 960
- GB-A- 2 088 400

## Description

La présente invention concerne un câble électrique et/ou optique résistant au feu comprenant au moins une couche électriquement isolante composite à base d'au moins un matériau cimentaire et d'au moins un amidon, et son procédé de fabrication.

Elle s'applique typiquement mais non exclusivement aux câbles électriques et/ou optiques destinés au transport d'énergie et/ou à la transmission de données, en particulier aux câbles électriques et/ou optiques de sécurité résistants au feu, notamment sans halogène, susceptibles de fonctionner pendant un laps de temps donné dans des conditions d'incendie, sans être pour autant propagateur d'incendie ni générateur de fumées importantes. Ces câbles de sécurité sont en particulier des câbles de transport d'énergie moyenne tension (notamment de 6 à 45-60 kV) ou des câbles de transmission basse fréquence, tels que des câbles de contrôle ou de signalisation.

Un câble d'énergie et/ou de télécommunication est un câble destiné au transport de l'énergie électrique et/ou à la transmission de données. Il comprend classiquement un ou plusieurs éléments conducteurs isolés, ou en d'autres termes un ou plusieurs conducteur(s) (électrique(s) et/ou optique(s)) allongé(s) entouré(s) par au moins une couche électriquement isolante. La couche électriquement isolante peut être typiquement une couche polymère électriquement isolante en contact physique avec le ou les conducteur(s) électrique(s) et/ou optique(s). Ledit ou lesdits éléments conducteurs isolés sont entourés par une gaine extérieure de protection destinée à protéger mécaniquement le ou les éléments conducteurs isolés. Dans certaines constructions de câbles, il n'y a qu'une seule couche qui assure les deux fonctions d'isolant électrique et de gaine de protection.

Les matériaux généralement utilisés pour former la couche électriquement isolante et/ou ladite gaine de protection sont des matériaux composites à base de polymères, par exemple de polymères siliconés, et de divers additifs, notamment des charges de renfort telles que de la silice, et des charges ignifugeantes (ou retardateurs de flamme) destinées à améliorer leur résistance au feu.

WO 2011/000692 A1 décrit en particulier une composition polymère ayant des propriétés de retard à la flamme comprenant un élastomère de copolyester, de 0 à 30% en masse d'un ou plusieurs autres polymères, de 1 à 15% en masse d'un retardateur de flamme contenant un halogène (e.g. éthane-1,2-bis(pentabromophényl), et de 0 à 15% en masse d'un retardateur de flamme sans halogène (e.g. Sb₂O₃). La composition peut comprendre en outre une charge telle que de la poudre d'amidon de maïs. La composition polymère peut être utilisée comme couche de protection dans un câble électrique.

Malgré la présence de telles charges, la résistance au feu de ces couches électriquement isolantes ne donne pas toujours entièrement satisfaction.

Afin de rendre un câble résistant au feu, il a également été proposé, notamment dans la demande de brevet EP 2 760 030 A1, de recouvrir ledit câble d'une couche électriquement isolante comprenant plusieurs bandes isolantes superposées comprenant du mica et des fibres de verre, et un liant polymère (e.g. polyorganosiloxane) au contact de chacune desdites bandes isolantes. Toutefois, le coût de production de ladite couche électriquement isolante est élevé (e.g. temps de préparation très long) et celle-ci présente un grand encombrement.

DE 21 05 096 décrit une composition retardatrice de flamme comprenant de l'amiante et/ou du talc en suspension dans une solution aqueuse de silicate de sodium (« waterglass »), et au moins un agent moussant choisi parmi les carbohydrates, les éthers de cellulose, l'amidon, le glycolate, la méthylcellulose et un de leurs mélanges. Ces agents moussants se décomposent rapidement quand ils sont exposés aux flammes et améliorent la résistance au feu.

D'autres matériaux tels que la pierre, la brique, le ciment, le plomb, l'acier, le béton, la laine de roche, les céramiques, les géopolymères, etc... ont des propriétés de résistance au feu.

Le ciment est une matière minérale pulvérulente formant avec l'eau ou avec une solution saline une pâte de ciment liante, capable d'agglomérer, en durcissant, des substances variées. Le durcissement se produit par simple hydratation d'aluminates de calcium et de silicates de calcium et la pâte de ciment liante conserve après durcissement, sa résistance et sa stabilité. Cette pâte de ciment liante est également appelée matériau cimentaire. Les ciments sont classés selon la norme EN-197-1-2000 en cinq grandes familles : le ciment Portland (CEM I), le ciment portland composé (CEM II), le ciment de hauts fourneaux (CEM III), le ciment pouzzolanique (CEM IV) et le ciment composé ou ciment au laitier et aux cendres (CEM V). Le ciment blanc est un ciment Portland sans oxyde métallique. Le ciment artificiel est généralement obtenu par cuisson de mélanges de silice, d'alumine, de carbonate de chaux, et éventuellement d'oxydes métalliques tels que l'oxyde de fer.

Les géopolymères sont considérés comme des liants alternatifs pouvant se substituer aux matériaux cimentaires précités. Les géopolymères sont essentiellement des composés chimiques minéraux ou des mélanges de composés constitués de motifs de type silico-oxyde (-Si-O-Si-O-), silico-aluminate (-Si-O-Al-O-), ferro-silico-aluminate (-Fe-O-Si-O-Al-O-), ou alumino-phosphate (-Al-O-P-O-), créés par un processus de géopolymérisation (i.e. polycondensation). Les géopolymères peuvent être utilisés seuls ou en mélange avec des polymères organiques, des fibres minérales, métalliques, ou organiques (e.g. fibres de verre, fibres céramiques, etc...), du carbone, du graphite, etc... selon le type d'application recherchée. Les géopolymères sont généralement capables de polymériser et de durcir à la température ambiante (ciments géopolymères). Il est également possible d'accélérer la vitesse de polymérisation et donc le durcissement des géopolymères en les soumettant à un traitement thermique.

Les géopolymères les plus courants sont ceux basés sur les aluminosilicates désignés sous le terme « poly(sialate) » [ou « poly(silico-oxo-aluminate » ou (-Si-O-Al-O-)ₙ avec n désignant le degré de polymérisation]. Ces géopolymères aluminosilicates résultent de la polycondensation d'oligomères de type oligo(sialate) formés à partir d'un mélange d'au moins un aluminosilicate, d'un réactif alcalin (e.g. silicate de sodium ou de potassium) et d'eau. Les géopolymères basés sur les aluminosilicates ont été groupés en trois familles en fonction du rapport atomique Si/Al, lequel pouvant être égal à 1, 2 ou 3. On distingue les poly(sialates) répondant à la formule Mₙ(-Si-O-Al-O-)ₙ ou (M)-PS, les poly(sialate-siloxos) répondant à la formule Mₙ(-Si-O-Al-O-Si-O-)ₙ ou (M)-PPS, et les poly(sialate-disiloxos) répondant à la formule Mₙ(-Si-O-Al-O-Si-O-Si-O)ₙ ou (M)-PSDS, avec M représentant au moins un cation alcalin ou alcalino-terreux tel que K, Na, Li, Cs ou Ca et n désignant le degré de polymérisation.

Les ciments géopolymères sont utilisés dans de nombreuses applications : conception de nouveaux matériaux dans les domaines du génie civil et de la construction, création de sculptures, fabrication de cloisons et de portes coupe-feu pour la protection contre les incendies, et tout récemment comme structure de la « boîte noire » embarquée dans les avions.

A titre d'exemple, la demande de brevet US 6,831,118 décrit un panneau anti-feu flexible en mousse composite comprenant une matrice en matière plastique (e.g. polyuréthane élastique souple) et un matériau de remplissage inorganique (e.g. grains de géopolymères). Le panneau peut être utilisé pour la protection contre le feu des ouvertures dans les murs, et également des passages pour câbles. Il est notamment préparé par injection plastique ou moulage à chaud d'une composition comprenant des précurseurs de la matrice en matière plastique (e.g. polyol et polyisocyanate), un matériau de remplissage inorganique (e.g. perlite) et un agent moussant (poudre d'aluminium).

Cependant, les solutions décrites ci-dessus ne sont pas adaptées, notamment en termes de flexibilité, d'adhérence et de protection thermique, pour pouvoir servir de couche électriquement isolante et résistante au feu dans un câble électrique et/ou de transmission de données, notamment lors d'un incendie. Par ailleurs, elles ne sont pas forcément compatibles avec la conservation des bonnes propriétés mécaniques et diélectriques des autres constituants d'un câble d'énergie et/ou de transmission de données (élément conducteur électrique et/ou optique, autres couches électriquement isolantes, écrans, etc...).

Le but de la présente invention est de pallier les inconvénients des techniques de l'art antérieur en proposant un câble d'énergie et/ou de télécommunication présentant une bonne résistance au feu, tout en garantissant de bonnes propriétés mécaniques, notamment en termes de flexibilité, et un coût de revient avantageux.

Un autre but de l'invention est de fournir un procédé de fabrication d'un câble résistant au feu simple, économique, facile à mettre en œuvre, et permettant de conduire à un câble qui évite la propagation de la flamme, résiste au feu afin de fonctionner le plus longtemps possible, et limite sa dégradation dans des conditions thermiques extrêmes telles qu'un incendie, tout en garantissant de bonnes propriétés mécaniques, notamment en termes de flexibilité.

La présente invention a pour premier objet un câble d'énergie et/ou de télécommunication comprenant au moins un élément conducteur allongé et au moins une couche composite électriquement isolante entourant ledit élément conducteur allongé, caractérisé en ce que la couche composite électriquement isolante comprend au moins un amidon, au moins un plastifiant de l'amidon et au moins un matériau cimentaire tel que défini dans la revendication 1 ou la revendication 10.

Grâce à la présence de la couche composite électriquement isolante, le câble de l'invention présente une bonne résistance au feu tout en ayant de bonnes propriétés mécaniques. En particulier, la couche composite électriquement isolante est suffisamment flexible pour permettre la manipulation du câble (e.g. enroulage, pliage, torsion) sans pour autant entrainer d'altération rédhibitoire de ladite couche qui aurait pour conséquence de diminuer sa cohésion et sa résistance au feu. Par ailleurs, la couche composite électriquement isolante reste intacte de la température ambiante à la température de fonctionnement du câble en charge (i.e. sous tension) et présente l'avantage de former une structure poreuse lorsque cette couche est exposée à des températures supérieures ou égales à 1000°C pendant une durée pouvant aller jusqu'à 120 min, notamment atteintes lors d'un incendie. Cette structure poreuse et rigide renferme de l'air qui par nature est un excellent isolant thermique.

La couche composite électriquement isolante du câble de l'invention est une couche hybride organique/inorganique, notamment constituée d'une seule phase organique/inorganique homogène.

Dans la présente invention, l'expression « matériau cimentaire » signifie un matériau solide inorganique obtenu sans étape de frittage et à partir d'au moins une étape de durcissement ou de prise, notamment par hydratation ou par polycondensation.

Le matériau cimentaire de l'invention est par conséquent différent d'une céramique. En effet, une céramique se distingue d'un matériau cimentaire en ce qu'elle est obtenue à partir d'au moins une étape de frittage (densification d'une poudre sous l'effet de la chaleur).

Le matériau cimentaire de l'invention comprend de préférence :
- du silicium (Si),
- de l'aluminium (Al) ou du magnésium (Mg),
- de l'oxygène (O), et
- au moins un élément choisi parmi le potassium (K), le sodium (Na), le lithium (Li), le césium (Cs) et le calcium (Ca).

L'aluminium (Al) est préféré. Le matériau cimentaire de l'invention est un ciment géopolymère ou est issu (i.e. est obtenu à partir) d'un mélange constitué d'un ciment anhydre conventionnel et d'eau ou d'un mélange constitué d'un silicate de magnésium, d'un silicate alcalin, d'une base alcaline et d'eau.

Avantageusement, le câble conforme à l'invention satisfait à au moins l'une quelconque des normes de résistance au feu suivantes : EN50200, IEC60331-1, EN50399, IEC60331-11, IEC60331-21, IEC60331-23, IEC60331-25, DIN4102, NBN713020 addendum 3, EN50577, NFC32070 CR1, IEC600332-1 et BS6387CWZ.

Avantageusement, la couche composite électriquement isolante définie précédemment satisfait à la norme de résistance au feu IEC 60331-11, avec des câbles électriques sous une tension de 10 kV exposés à une température de 750°C environ pendant 120 minutes.

La couche composite de l'invention se transforme sous l'effet d'une température élevée, notamment une température supérieure à 1000°C généralement atteinte lors d'un incendie, pour former une couche résiduelle cohésive et poreuse qui protège le câble, et notamment les couches sous-jacentes et/ou l'élément conducteur allongé.

La couche composite électriquement isolante présente de préférence une épaisseur sensiblement constante et constitue notamment une enveloppe de protection continue.

La couche composite électriquement isolante présente de préférence une épaisseur allant de 0,5 à 5 mm environ, et de préférence encore allant de 0,8 à 3 mm environ.

Lorsque l'épaisseur de la couche composite électriquement isolante est inférieure à 0,5 mm, la résistance au feu de ladite couche n'est pas assurée et la protection thermique du câble de l'invention n'est pas suffisante.

Selon une première forme de réalisation de l'invention, le matériau cimentaire est issu d'un mélange constitué d'un ciment anhydre conventionnel et d'eau. Le durcissement provient alors de l'hydratation de silicates de calcium et d'aluminates de calcium.

Le ciment anhydre peut être du ciment Portland, et en particulier du ciment blanc ou du ciment au laitier et aux cendres. Les ciments précités sont bien connus de l'homme du métier.

Selon une deuxième forme de réalisation de l'invention, le matériau cimentaire est un ciment géopolymère.

Dans la présente invention, le terme « ciment géopolymère » ou « durcissement d'une composition géopolymère » indique que le durcissement s'effectue par réaction interne du type polycondensation ou du type hydrothermal et qu'il n'est pas le résultat d'un simple séchage, comme c'est généralement le cas pour des liants à base de silicates alcalins.

En effet, les ciments géopolymères résultent d'une réaction de polycondensation minérale par activation alcaline, dite géosynthèse, par opposition aux liants traditionnels hydrauliques dans lesquels le durcissement est le résultat d'une hydratation des aluminates de calcium et des silicates de calcium.

Le ciment géopolymère peut être un ciment géopolymère aluminosilicate, notamment pouvant présenter un rapport molaire Si/Al allant de 1 à 35.

Le ciment géopolymère aluminosilicate peut être choisi parmi les poly(sialates) répondant à la formule (I) Mₙ(-Si-O-Al-O-)ₙ [(M)-PS], les poly(sialate-siloxos) répondant à la formule (II) Mₙ(-Si-O-Al-O-Si-O-)ₙ [(M)-PPS], et les poly(sialate-disiloxos) répondant à la formule (III) Mₙ(-Si-O-Al-O-Si-O-Si-O)ₙ [(M)-PSDS], formules dans lesquelles M représente au moins un cation alcalin K, Na, Li, Cs ou un de leurs mélanges, et n désignant le degré de polymérisation. Dans le composé de formule (I), le rapport molaire Si/Al est de 1, dans le composé de formule (II), le rapport molaire Si/Al est de 2, et dans le composé de formule (III), le rapport molaire Si/Al est de 3.

Le rapport molaire Si/Al influence les propriétés mécaniques du ciment géopolymère, en particulier ses propriétés de résistance à une contrainte mécanique. Selon une forme de réalisation préférée de l'invention, le ciment géopolymère est choisi parmi les composés dans lesquels le rapport molaire Si/Al va de 1,9 à 3 environ et encore plus préférentiellement de 1,9 à 2,5 environ. Le choix de ces ciments géopolymères permet d'avoir une couche composite électriquement isolante résistante au feu tout en étant assez flexible pour permettre au câble conforme à l'invention d'être manipulé sans entrainer de fissures de ladite couche composite électriquement isolante.

Un matériau cimentaire selon les première et deuxième formes de réalisation définies ci-dessus comprend du silicium (Si), de l'aluminium (Al), de l'oxygène (O), et au moins un élément choisi parmi le potassium (K), le sodium (Na), le lithium (Li), le césium (Cs) et le calcium (Ca).

Selon une troisième forme de réalisation de l'invention, le matériau cimentaire est issu d'un mélange constitué d'un silicate de magnésium, d'un silicate alcalin, d'une base alcaline et d'eau.

Un matériau cimentaire selon la troisième forme de réalisation définie ci-dessus comprend du silicium (Si), du magnésium (Mg), de l'oxygène (O), et au moins un élément choisi parmi le potassium (K), le sodium (Na), le lithium (Li), le césium (Cs) et le calcium (Ca).

Le matériau cimentaire est de préférence un ciment géopolymère.

Selon l'invention, le matériau cimentaire représente de préférence de 10 à 50% en masse environ, et encore plus préférentiellement de 25 à 40% en masse environ, par rapport à la masse totale de ladite couche composite électriquement isolante.

L'amidon comprend généralement de l'amylose, de l'amylopectine, et éventuellement du phytoglycogène.

A titre d'exemple (et selon la source), l'amidon comprend de 15 à 30% en masse d'amylose, de 70 à 85% en masse environ d'amylopectine, et de 0 à 20% en masse de phytoglycogène, par rapport à la masse totale de l'amidon.

A titre d'exemple d'amidon, on peut citer un amidon natif ou un amidon modifié, et de préférence un amidon natif.

L'amidon natif peut être un amidon de céréales (e.g. blé, maïs, orge, triticale, sorgo ou riz), de tubercules (e.g. pomme de terre ou manioc), de légumineuses (e.g. pois ou soja), de racines, de bulbes, de tiges, de fruits ou un de leurs mélanges.

L'amidon modifié peut être un amidon modifié physiquement, chimiquement ou par voie enzymatique.

L'amidon modifié peut être choisi parmi les amidons oxydés, les amidons hydrolysés par voie acide, oxydante ou enzymatique, les amidons modifiés (e.g. fonctionnalisés) par voie physico-chimique, comme notamment les amidons estérifiés et/ou éthérifiés.

La fonctionnalisation peut s'obtenir par acétylation en phase aqueuse avec de l'anhydride acétique, extrusion réactive d'anhydrides d'acides, d'anhydrides mixtes, de chlorures d'acides gras, d'oligomères de caprolactones ou de lactides, par hydroxypropylation en phase colle, par cationisation en phase sèche ou phase colle, par réticulation, par anionisation par phosphatation ou par succinylation, par silylation, par télomérisation au butadiène, etc...

Les amidons oxydés sont préférés.

Le plastifiant de l'amidon est destiné à améliorer la dispersion de l'amidon au sein de la couche composite. Il peut être un stéarate de métal, un polyéthylène glycol, un éthylène glycol, un polyol comme le glycérol, le sorbitol, le mannitol, le maltitol, le xylitol ou un oligomère de l'un de ces polyols, un sucrose comme le glucose ou le fructose, un plastifiant contenant des groupes amides, tout type de plastifiant à base de polysaccharide(s) modifié(s) ou un de leurs mélanges.

Le plastifiant préféré est un stéarate de métal tel que le stéarate de zinc.

Selon l'invention, l'amidon et le plastifiant de l'amidon (i.e. leur combinaison) représentent de préférence de 50 à 90% en masse environ, et encore plus préférentiellement de 60 à 75% en masse environ, par rapport à la masse totale de ladite couche composite électriquement isolante.

Le rapport massique plastifiant de l'amidon/amidon peut aller de 1/1 à 3/1 environ.

La couche composite peut comprendre en outre au moins un agent retardant la prise en masse à température ambiante de la composition composite telle que définie ci-après et qui permet à celle-ci de rester malléable plus longtemps.

Un tel agent retardateur peut être choisi parmi l'ammonium, les métaux alcalins, les métaux alcalino-terreux, le borax, les lignosulfonates et en particulier les sels de métaux de lignosulfonates, la cellulose et ses dérivés tels que l'acétate de cellulose ou la carboxyméthyl hydroxyéthyl cellulose, les lignines sulfoalkylées telles que la lignine sulfométhylée, les acides hydroxycarboxyliques, les éthylènes glycols et leurs dérivés, les copolymères de sels d'acide 2-acrylamido-2-méthylpropane sulfonique et d'acide acrylique ou d'acide maléique, les sels saturés, et leurs mélanges.

Selon une forme de réalisation particulièrement préférée de l'invention, l'agent retardateur est choisi parmi les lignosulfonates.

Lorsqu'il est utilisé, l'agent retardateur représente de préférence de 0,2 à 1% en masse environ, et encore plus préférentiellement de 0,4 à 0,8% en masse environ, par rapport à la masse totale de la couche composite.

La couche composite peut comprendre en outre au moins une charge inerte, notamment choisi parmi le talc, le koalin, le métakaolin et un de leurs mélanges.

Le talc est préféré.

Lorsqu'elle est utilisée, la charge inerte représente de préférence de 0,5 à 5% en masse environ, par rapport à la masse totale du matériau cimentaire.

La couche composite peut comprendre en outre au moins un composé accélérant la prise en masse (i.e. le durcissement) à température ambiante de la composition composite telle que définie ci-après.

A titre d'exemples de composés accélérant la prise, on peut citer le sulfate d'aluminium, les aluns (e.g. sulfate double d'aluminium et de potassium), le chlorure de calcium, le sulfate de calcium, le sulfate de calcium hydraté, l'aluminate de sodium, le carbonate de sodium, le chlorure de sodium, le silicate de sodium, le sulfate de sodium, le chlorure de fer (III) ou un de leurs mélanges.

La couche composite peut comprendre en outre au moins un dispersant.

A titre d'exemples de dispersants, c'est-à-dire des composés qui permettent d'améliorer les propriétés rhéologiques de la composition composite telle que définie ci-après, on peut citer un condensat d'acide naphtalène sulfonique-formaldéhyde, un condensat d'acétone-formaldéhyde-sulfite, un condensat de sulfonate de mélamine-formaldéhyde, ou un de leurs mélanges.

La couche composite électriquement isolante peut comprendre en outre au moins un additif organique à structure polymère. Cet additif est destiné à améliorer la cohésion de la couche composite et son adhérence sur la couche du câble avec laquelle elle est destinée à être en contact physique direct.

L'additif organique à structure polymère est de préférence choisi parmi les fibres de polyoléfine telles que les fibres de polypropylène, les polyéthylènes haute densité (HDPE), les aramides, et les fibres techniques de verre enduites de silicone ou d'un polymère organique de type polyéthylène, et un de leurs mélanges.

Lorsqu'il est utilisé, l'additif organique à structure polymère représente de préférence de 0,1 à 2% en masse, et encore plus préférentiellement de 0,5 à 0,8% en masse environ, par rapport à la masse totale de la couche composite électriquement isolante, notamment selon l'application et la flexibilité recherchée.

La couche composite peut comprendre en outre au moins un colorant, notamment choisi parmi les colorants liquides à 20°C environ.

Lorsqu'il est utilisé, le colorant représente de préférence de 0,1 à 0,8% en masse environ, par rapport à la masse totale de la couche composite électriquement isolante.

La couche composite électriquement isolante peut comprendre en outre un deuxième plastifiant, identique ou différent du plastifiant de l'amidon.

Le deuxième plastifiant peut être un stéarate de métal, un polyéthylène glycol, un éthylène glycol, un polyol comme le glycérol, le sorbitol, le mannitol, le maltitol, le xylitol ou un oligomère de l'un de ces polyols, un sucrose comme le glucose ou le fructose, un plastifiant contenant des groupes amides, ou tout type de plastifiant à base de polysaccharide(s) modifié(s). Ce deuxième plastifiant est destiné à améliorer la dispersion du matériau cimentaire au sein de la couche composite.

Lorsqu'il est utilisé, le deuxième plastifiant représente de préférence de 0,05 à 1% en masse, et encore plus préférentiellement de 0,1 à 0,3% en masse environ, par rapport à la masse totale de la couche composite électriquement isolante.

L'agent retardateur, le composé accélérateur, le dispersant, la charge inerte, le colorant et l'additif organique à structure polymère ne doivent pas altérer les propriétés électriques (e.g. résistance au feu) et mécaniques (e.g. résistance à une contrainte mécanique, adhérence, flexibilité) de la couche composite.

La couche composite électriquement isolante peut comprendre en outre de l'eau, notamment provenant du procédé de préparation de ladite couche tel que décrit ci-après. L'eau servant éventuellement à dissoudre ou disperser le plastifiant de l'amidon ou l'eau utilisée pour préparer la composition cimentaire peut ne pas d'éliminer complètement à l'issue du procédé. Elle se retrouve alors sous la forme de molécules d'eau formant des liaisons non covalentes (e.g. liaisons de van der waals) avec les autres composés de la couche.

La couche composite électriquement isolante comprend de préférence au plus 30% en masse environ d'eau, par rapport la masse totale de ladite couche.

La couche composite électriquement isolante de l'invention est de préférence non poreuse.

La couche composite électriquement isolante de l'invention est de préférence une couche interne du câble de l'invention.

Selon l'invention, on entend par « couche interne », une couche qui ne constitue pas la couche la plus externe du câble. Plus particulièrement, une couche interne est une couche interposée entre l'élément conducteur allongé et une gaine externe de protection, notamment électriquement isolante, ladite couche étant ou non en contact physique direct avec l'élément conducteur allongé.

La couche composite du câble de l'invention recouvre généralement un ou plusieurs conducteurs ou se positionne sur une gaine ou couche interne du câble, elle fait alors office de bourrage.

La couche composite électriquement isolante de l'invention est de préférence en contact physique direct avec l'élément conducteur allongé.

Le câble peut comprendre une pluralité d'éléments conducteurs allongés. La couche composite électriquement isolante peut alors entourer la pluralité d'éléments conducteurs allongés du câble.

La couche composite électriquement isolante de l'invention est de préférence en contact physique direct avec les éléments conducteurs allongés.

Le câble peut comprendre une pluralité de couches composites électriquement isolantes telles que définies dans l'invention.

Selon une première variante de ce mode de réalisation, le câble comprend un élément conducteur allongé et la pluralité de couches composites entoure ledit élément conducteur allongé.

Selon une deuxième variante de ce mode de réalisation, le câble comprend une pluralité d'éléments conducteurs allongés et chacune des couches composites électriquement isolantes entoure individuellement chacun des éléments conducteurs allongés pour former des éléments conducteurs allongés isolés.

Selon cette deuxième variante, chacune des couches composites électriquement isolantes de l'invention est de préférence en contact physique direct avec chacun des éléments conducteurs allongés qu'elle entoure.

Le ou les éléments conducteurs allongés du câble de l'invention sont de préférence des éléments électriquement conducteurs allongés. Le câble est par conséquent de préférence un câble électrique.

Le câble de l'invention peut comprendre en outre une gaine externe de protection, notamment électriquement isolante, entourant la ou les couche(s) composite(s).

La gaine externe de protection est de préférence réalisée en un matériau exempt d'halogène. Elle peut être réalisée classiquement à partir de matériaux retardant la propagation de la flamme ou résistant à la propagation de la flamme. Notamment, si ces derniers ne contiennent pas d'halogène, on parle de gainage de type HFFR (pour l'anglicisme « *Halogen Free Flame Retardant* »).

La gaine représente la couche la plus externe du câble (i.e. également appelée gaine extérieure de protection).

Elle comprend au moins un polymère organique ou inorganique.

Le choix du polymère organique ou inorganique n'est pas limitatif et ceux-ci sont bien connus de l'homme du métier.

Selon une forme de réalisation préférée de l'invention, le polymère organique ou inorganique est choisi parmi les polymères réticulés et non réticulés.

Le polymère organique ou inorganique peut être un homo- ou un co-polymère ayant des propriétés thermoplastiques et/ou élastomères.

Les polymères inorganiques peuvent être des polyorganosiloxanes.

Les polymères organiques peuvent être des polyuréthanes ou des polyoléfines.

Les polyoléfines peuvent être choisies parmi les polymères d'éthylène et de propylène. A titre d'exemple de polymères d'éthylène, on peut citer le polyéthylène linéaire basse densité (LLDPE), le polyéthylène basse densité (LDPE), le polyéthylène moyenne densité (MDPE), le polyéthylène haute densité (HDPE), les copolymères d'éthylène et d'acétate de vinyle (EVA), les copolymères d'éthylène et d'acrylate de butyle (EBA), d'acrylate de méthyle (EMA), de 2-hexyléthyl acrylate (2HEA), les copolymères d'éthylène et d'alpha-oléfines tels que par exemple les polyéthylène-octène (PEO), les copolymères d'éthylène et de propylène (EPR), les terpolymères d'éthylène et de propylène (EPT) tels que par exemple les terpolymères d'éthylène propylène diène monomère (EPDM) ou un de leurs mélanges.

Le polymère de la gaine est de préférence un polymère organique, de préférence encore un polymère d'éthylène, et de préférence encore un copolymère d'éthylène et d'acétate de vinyle, un polyéthylène linéaire basse densité ou un de leurs mélanges.

La gaine externe de protection peut comprendre en outre une charge minérale ignifugeante hydratée. Cette charge minérale ignifugeante hydratée agit principalement par voie physique en se décomposant de manière endothermique (e.g. libération d'eau), ce qui a pour conséquence d'abaisser la température de la gaine et de limiter la propagation des flammes le long du câble. On parle notamment de propriétés de retard à la flamme, bien connues sous l'anglicisme « *flame retardant* ».

La charge minérale ignifugeante hydratée peut être un hydroxyde métallique tel que l'hydroxyde de magnésium ou le trihydroxyde d'aluminium.

La gaine externe de protection peut comprendre en outre une charge inerte, notamment choisi parmi le talc, les micas, les argiles déshydratées et un de leurs mélanges.

Le talc est préféré.

La présente invention a pour deuxième objet un procédé de fabrication d'un câble conforme au premier objet de l'invention, caractérisé en ce qu'il comprend au moins les étapes suivantes :
i) une étape de préparation d'une composition composite comprenant au moins une composition cimentaire, au moins un amidon et au moins un plastifiant de l'amidon,
ii) une étape d'application de la composition composite obtenue à l'étape i), autour d'au moins un élément conducteur allongé,
iii) une étape de durcissement de la composition composite, pour former une couche composite électriquement isolante telle que définie dans le premier objet de l'invention.

Ainsi, la couche composite électriquement isolante du câble telle que définie ci-avant dans le premier objet de l'invention est obtenue à partir de ladite composition composite telle que définie dans le deuxième objet de l'invention.

Le procédé conforme à l'invention est rapide, simple et avantageux d'un point de vue économique. Il permet de fabriquer en peu d'étapes un câble présentant une bonne résistance au feu, tout en garantissant de bonnes propriétés mécaniques, notamment en termes de flexibilité.

Dans la présente invention, le terme « composition cimentaire » signifie une composition liquide ou pâteuse permettant de former après durcissement ou prise (sans étape de frittage) le matériau cimentaire tel que défini dans le premier objet de l'invention. Le durcissement ou la prise peut se faire par polycondensation ou hydratation.

La composition cimentaire de l'invention est par conséquent différente d'une composition ou poudre céramique.

La composition cimentaire de l'étape i) comprend de préférence :
- de l'eau,
- du silicium (Si),
- de l'aluminium (Al) ou du magnésium (Mg),
- de l'oxygène (O), et
- au moins un élément choisi parmi le potassium (K), le sodium (Na), le lithium (Li), le césium (Cs) et le calcium (Ca).

L'aluminium (Al) est préféré.

L'amidon et le plastifiant de l'amidon sont tels que définis dans le premier objet de l'invention. La composition cimentaire de l'invention est une composition géopolymère, un mélange constitué d'un ciment anhydre conventionnel et d'eau, ou un mélange constitué d'un silicate de magnésium, d'un silicate alcalin, d'une base alcaline et d'eau.

La composition géopolymère peut être une composition géopolymère aluminosilicate, notamment répondant à la composition molaire suivante (I) :

w SiO₂ : x Al₂O₃ : y M₂O : z H₂O (I)

dans laquelle :
- M est choisi parmi Na, K, Li, Cs et un de leurs mélanges,
- w est une valeur comprise entre 0,1 et 8 environ,
- x est une valeur comprise entre 0,1 et 0,3 environ,
- y est une valeur comprise entre 0,05 et 0,2 environ,
- z est une valeur comprise entre 0,8 et 3 environ,
ladite composition comprenant de 35% à 79% en masse environ de matières solides (SiO₂, Al₂O₃, M₂O), par rapport à la masse totale de ladite composition.

Le rapport massique eau/matière solides dans ladite composition géopolymère détermine la cinétique de solidification lors de l'étape iii).

Selon une forme de réalisation préférée de l'invention, le rapport massique matières solides/eau varie de 0,6 à 1,65 environ, et encore plus préférentiellement de 0,85 à 1,40 environ. Un tel rapport massique permet d'avoir une composition cimentaire assez fluide pour permettre son mélange homogène avec l'amidon lors de l'étape i), et dont la cinétique de solidification est assez lente pour permettre l'application de la composition composite résultante autour de l'élément conducteur allongé avant sa solidification.

L'étape i) est de préférence effectuée en préparant séparément une composition d'amidon selon une étape i-1) et une composition cimentaire selon une étape i-2), puis en mélangeant les deux compositions selon une étape i-3), afin de former la composition composite.

La composition d'amidon peut être obtenue selon l'étape i-1), en mélangeant un amidon, éventuellement de l'eau, et un plastifiant de l'amidon, l'amidon et le plastifiant de l'amidon étant tels que définis dans le premier objet de l'invention.

L'eau est avantageusement utilisée lorsque le plastifiant de l'amidon est solide à température ambiante (20-25°C), notamment afin de permettre sa dissolution ou sa dispersion au sein de la composition composite.

En particulier, la composition d'amidon obtenue à l'étape i-1) comprend de 21 à 58% en masse environ d'amidon et de 29 à 46% en masse environ de plastifiant, par rapport à la masse totale de la composition d'amidon.

En particulier, la composition d'amidon obtenue à l'étape i-1) comprend de 25 à 60% en masse environ de plastifiant de l'amidon et de 30 à 50% en masse environ de plastifiant de l'amidon, par rapport à la masse totale de la composition d'amidon.

Selon une première variante de l'invention, la composition cimentaire est un mélange constitué d'un ciment anhydre conventionnel et d'eau. Elle est donc préparée par mélange d'un ciment anhydre conventionnel tel que défini dans le premier objet de l'invention et d'eau selon l'étape i-2).

Selon une deuxième variante de l'invention, la composition cimentaire est une composition géopolymère, et de préférence une composition géopolymère aluminosilicate.

La préparation d'une composition géopolymère est généralement effectuée à un pH élevé, notamment variant de 10 à 13.

Lorsque la composition est une composition géopolymère aluminosilicate, l'étape i-2) comprend de préférence les sous-étapes suivantes :
i-2a) une étape de préparation d'une solution aqueuse de silicate alcalin de rapport molaire SiO_{2/}M₂O allant de 1,65 à 3,4 environ, la concentration massique du silicate alcalin dans l'eau pouvant aller de 35 à 90 % environ, et
i-2b) une étape de mélange d'un aluminosilicate sous forme de poudre de rapport molaire Al₂O₃/SiO₂ allant de 0,4 à 0,8 avec la solution aqueuse de silicate alcalin préparée à l'étape précédente, la concentration massique de l'aluminosilicate dans la solution aqueuse de silicate alcalin préparée à l'étape précédente pouvant aller de 10 à 80% environ, et de préférence de 25% à 65% environ.

L'aluminosilicate peut être choisi parmi le métakaolin (i.e. kaolin calciné), les cendres volantes (bien connues sous l'anglicisme « fly ash »), le laitier de haut fourneau (bien connu sous l'anglicisme « blast furnace slag »), les argiles gonflantes telles que la bentonite, les argiles calcinées, tout type de composé comprenant de l'aluminium et de la fumée de silice, les zéolithes et l'un de leurs mélanges. Parmi ces composés, le métakaolin est préféré, notamment celui commercialisé par la société Imérys.

La solution aqueuse de silicate alcalin peut être préparée en mélangeant du dioxyde de silicium SiO₂ ou un silicate alcalin avec une base MOH dans laquelle M est K ou Na.

La présence de la base permet d'augmenter le pH de la composition cimentaire, et d'améliorer la cohésion de la couche à l'issue de l'étape iii).

Le dioxyde de silicium SiO₂ peut être choisi parmi la fumée de silice (i.e. silice pyrogénée), le quartz, et leurs mélanges.

Le silicate alcalin peut être choisi parmi les silicates de sodium, les silicates de potassium et l'un de leurs mélanges. Les silicates alcalins commercialisés par la société Silmaco et par la société PQ Corporation sont préférés.

La base MOH peut être choisie parmi KOH, NaOH et leurs mélanges.

L'étape i-2a) peut être effectuée en dissolvant la base dans de l'eau, entraînant un dégagement de chaleur (réaction exothermique), puis en ajoutant la silice (ou le silicate alcalin). La chaleur dégagée accélère alors la dissolution de la silice (ou du silicate alcalin) lors de l'étape i-2a) et de l'aluminosilicate lors de l'étape i-2b) et de ce fait la prise de la composition géopolymère.

A l'issue de l'étape i-2b), la composition géopolymère présente une viscosité qui augmente avec le temps lorsqu'elle est exposée à l'air libre.

Selon une troisième variante de l'invention, la composition cimentaire est un mélange constitué d'un silicate de magnésium, d'un silicate alcalin, d'une base alcaline et d'eau. Elle est donc préparée par mélange d'un silicate de magnésium, d'un silicate alcalin, d'une base alcaline et d'eau selon l'étape i-2).

La base alcaline peut être KOH ou NaOH ou leur mélange.

La présence de la base permet d'augmenter le pH de la composition cimentaire et d'améliorer la cohésion de la couche à l'issue de l'étape iii).

Le silicate alcalin peut être choisi parmi les silicates de sodium, les silicates de potassium et l'un de leurs mélanges. Les silicates alcalins commercialisés par la société Silmaco et par la société PQ Corporation sont préférés.

Le silicate de magnésium peut être du talc.

La composition composite peut comprendre en outre au moins un agent retardant la prise en masse de la composition cimentaire et/ou au moins une charge inerte et/ou au moins un dispersant et/ou au moins un composé accélérant la prise et/ou au moins un additif organique à structure polymère et/ou au moins un colorant et/ou au moins un deuxième plastifiant, les composés précités étant tels que définis dans le premier objet de l'invention.

La composition composite ne comprend pas de préférence d'agent moussant et/ou de co-agent d'expansion. En effet, la couche composite électriquement isolante obtenue à partir de ladite composition composite est une couche en matériau massif (i.e. présentant une faible porosité).

L'étape ii) est de préférence effectuée par extrusion à chaud de ladite composition composite, notamment à une température allant de 60°C à 110°C environ, et de préférence de 70°C à 95°C environ.

L'étape iii) de durcissement est généralement effectuée à température ambiante. La couche composite obtenue reste souple et cohésive au cours du temps.

Le procédé peut comprendre en outre après l'étape ii) (et avant l'étape iii)), une étape d'application d'une enveloppe hermétique autour de la composition composite.

De préférence, l'enveloppe hermétique est appliquée dans le sens de la longueur du câble ou en transversale.

De façon générale, l'enveloppe hermétique est un ruban, notamment de type Alu/PET ou PET/Alu/PET, ledit ruban ayant de préférence une largeur autorisant un recouvrement de 20% environ.

Suite à l'étape ii), la couche isolante est recouverte d'une enveloppe hermétique de type Alu/PET déposée en long ou transversale.

Le procédé peut comprendre en outre avant, pendant ou après l'étape iii), une étape iv) d'application d'une gaine électriquement isolante autour de la couche composite électriquement isolante.

La réalisation de cette gaine extérieure de protection peut notamment être réalisée par extrusion.

L'invention sera mieux comprise, et d'autres buts, détails, caractéristiques et avantages de celle-ci apparaîtront plus clairement au cours de la description suivante de modes de réalisation particuliers de l'invention, donnés uniquement à titre illustratif et non limitatif, en référence aux figures annexées.

Sur ces figures :
- la figure 1 est une vue schématique de section d'un câble électrique de l'art antérieur non conforme à l'invention ;
- la figure 2 est une vue schématique de section d'un câble électrique selon un mode de réalisation de la présente invention.

Pour des raisons de clarté, seuls les éléments essentiels pour la compréhension de l'invention ont été représentés de manière schématique sur ces figures, et ceci sans respect de l'échelle.

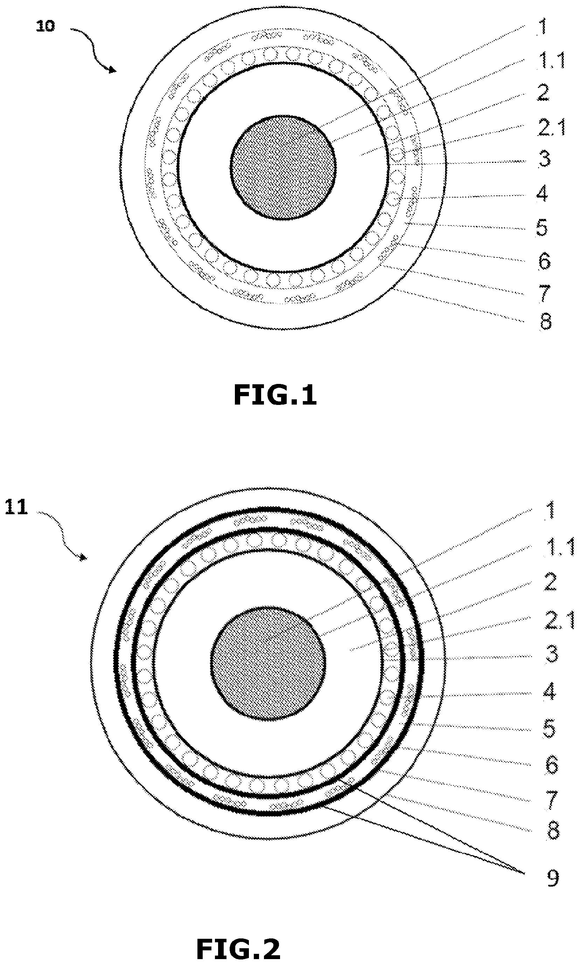

Le câble électrique 10, illustré sur la figure 1, correspond à un câble électrique à moyenne tension résistant au feu de type SHXCHX pour des applications de type marine.

Ce câble électrique 10 comprend : un élément électriquement conducteur central allongé 1 et, successivement et coaxialement autour de cet élément conducteur central 1, un écran semi-conducteur interne 1.1, une couche électriquement isolante 2 (e.g. en élastomère d'éthylène et de propylène réticulé, EPR), un écran semi-conducteur externe 2.1, une couche rubanée semi-conductrice 3, une tresse métallique 4 (e.g. constituée de fils de cuivre étamé de section circulaire), une gaine interne comprenant un ruban de polyester 5 et des fils de cuivre étamé 6, un ruban de polyester 7, et une gaine externe 8 (e.g. en élastomère).

Le câble électrique 11, illustré sur la figure 2, correspond à un câble électrique de structure similaire à celle du câble de la figure 1 mais dans lequel deux couches composites électriquement isolantes telles que définies dans l'invention ont été incorporées.

Ce câble électrique 11 comprend : un élément électriquement conducteur central allongé 1 et, successivement et coaxialement autour de cet élément conducteur central 1, un écran semi-conducteur interne 1.1, une couche électriquement isolante 2 (e.g. en élastomère d'éthylène et de propylène réticulé, EPR), un écran semi-conducteur externe 2.1, une couche rubanée semi-conductrice 3, une tresse métallique 4 (e.g. constituée de fils de cuivre étamé de section circulaire), une couche composite électriquement isolante 9 telle que définie dans l'invention, une gaine interne comprenant un ruban de polyester 5 et des fils de cuivre étamé 6, un ruban de polyester 7, une couche composite électriquement isolante 9 telle que définie dans l'invention, et une gaine externe 8 (e.g. en élastomère).

Les exemples suivants permettent d'illustrer la présente invention. Ils n'ont pas de caractère limitatif sur la portée globale de l'invention telle que présentée dans les revendications. Les rapports entre les oxydes sont des rapports molaires et les % indiqués sont en masse.

### EXEMPLES

Les matières premières utilisées dans les exemples, sont listées ci-après :
- solution aqueuse de silicate de sodium à 50% massique environ de type « *waterglass* », Simalco, de formule Na₂O.2SiO₂ et de rapport molaire SiO_{2/}Na₂O de 2 environ,
- amidon, Roquette®, Tackidex I-735,
- plastifiant Roquette®, Neosorb™ 70/70,
- eau courante,
- hydroxyde de sodium, Sigma Aldrich, de pureté > 85%,
- aluminosilicate, PoleStar®450R, Imerys, de rapport molaire Al₂O₃/SiO₂ de 41/55 (i.e. de 0,745 environ).

Sauf indications contraires, toutes ces matières premières ont été utilisées telles que reçues des fabricants.

### Exemple 1 : préparation d'un câble résistant au feu conforme à l'invention

Une composition d'amidon a été préparée en mélangeant à température ambiante 400 g d'amidon, 400 g de plastifiant et 160 g d'eau.

Une composition géopolymère aluminosilicate à titre de composition cimentaire a été préparée de la façon suivante : une solution de silicate alcalin a été préparée en mélangeant 360 g d'une solution aqueuse de silicate de sodium, 200 g d'eau et 60 g d'hydroxyde de sodium. Puis 300 g d'aluminosilicate ont été mélangés avec la solution de silicate alcalin.

Ladite composition géopolymère aluminosilicate comprenait 40% en masse environ de matières solides par rapport à la masse totale de ladite composition.

La composition géopolymère aluminosilicate avait la composition molaire de formule (I) suivante :

0,54 SiO₂ : 0,16 Al₂O₃ : 0,1 Na₂O : 2,3 H₂O (I)

La composition géopolymère a été mélangée avec la composition d'amidon telle que décrite ci-dessus pour former une composition composite.

La composition composite a été extrudée à chaud autour d'un élément électriquement conducteur allongé en cuivre de section 50 mm² à l'aide d'une extrudeuse vendue sous la dénomination commerciale FAIREX. La température au sein de l'extrudeuse allait de 40°C à 95°C environ.

Ledit câble obtenu comprenait un élément électriquement conducteur allongé entouré par une couche composite électriquement isolante comprenant 65% en masse d'amidon et de plastifiant de l'amidon et 35% en masse d'un ciment géopolymère aluminosilicate à titre de matériau cimentaire.

La couche composite avait une épaisseur de 2,5 mm environ.

La couche composite du câble conforme à l'invention a été évaluée au regard des performances de résistance au feu selon les normes IEC 60331-11 et IEC 60331-21. Le câble tel qu'obtenu dans l'exemple 1, et à titre comparatif un câble non conforme à l'invention ne comprenant pas de couche composite de l'invention (i.e. élément électriquement conducteur allongé seul), ont été soumis à une tension de 10 kV pendant 120 minutes à 85°C.

Les résultats de ce test sont présentés dans le tableau 1 ci-dessous :

**TABLEAU 1**

| **Câble** | **Tension appliquée** | **Temps avant claquage** (en min) |
|---|---|---|
| Câble conforme à l'invention de l'exemple 1 | 10 kV | > 120 |
| Câble non conforme à l'invention | 10 kV | 13 |

Les résultats présentés dans le tableau 1 confirment la résistance au feu du câble de l'invention. On observe un claquage du câble non conforme à l'invention au bout de 13 min, alors que le câble de l'invention ne claque pas après 120 min. Par ailleurs, le câble de l'invention peut supporter une tension de 30 kV environ pendant au moins 20 min.

Par ailleurs, on a observé le claquage d'un câble non conforme comprenant une couche électriquement isolante sans amidon obtenue uniquement à partir de la composition géopolymère aluminosilicate telle que décrite ci-dessus au bout de 37 ou 47 min.

## Revendications

1. Câble d'énergie et/ou de télécommunication comprenant au moins un élément conducteur allongé et au moins une couche composite électriquement isolante entourant ledit élément conducteur allongé, **caractérisé en ce que** la couche composite électriquement isolante comprend au moins un amidon, au moins un plastifiant de l'amidon et au moins un matériau cimentaire, et **en ce que** :
- le matériau cimentaire est un ciment géopolymère ou est issu d'un mélange constitué d'un ciment anhydre conventionnel et d'eau ou d'un mélange constitué d'un silicate de magnésium, d'un silicate alcalin, d'une base alcaline et d'eau, et
- le matériau cimentaire représente de 10 à 50% en masse, par rapport à la masse totale de ladite couche composite électriquement isolante.

2. Câble selon la revendication 1, **caractérisé en ce que** le matériau cimentaire comprend du silicium (Si), de l'aluminium (Al) ou du magnésium (Mg), de l'oxygène (O), et au moins un élément choisi parmi le potassium (K), le sodium (Na), le lithium (Li), le césium (Cs) et le calcium (Ca).

3. Câble selon la revendication 1 ou 2, **caractérisé en ce que** le matériau cimentaire est un ciment géopolymère aluminosilicate.

4. Câble selon l'une quelconque des revendications précédentes, **caractérisé en ce que** la couche composite électriquement isolante présente une épaisseur allant de 0,5 à 5 mm.

5. Câble selon l'une quelconque des revendications précédentes, **caractérisé en ce que** l'amidon est un amidon natif ou un amidon modifié.

6. Câble selon l'une quelconque des revendications précédentes, **caractérisé en ce que** le plastifiant de l'amidon est un stéarate de métal, un polyéthylène glycol, un éthylène glycol, un polyol, un sucrose, un plastifiant contenant des groupes amides, tout type de plastifiant à base de polysaccharide(s) modifié(s) ou un de leurs mélanges.

7. Câble selon l'une quelconque des revendications précédentes, **caractérisé en ce que** l'amidon et le plastifiant de l'amidon représentent de 50 à 90% en masse, par rapport à la masse totale de ladite couche composite électriquement isolante.

8. Câble selon l'une quelconque des revendications précédentes, **caractérisé en ce que** la couche composite électriquement isolante est une couche interne du câble.

9. Câble selon l'une quelconque des revendications précédentes, **caractérisé en ce qu'**il comprend en outre une gaine externe de protection entourant la ou les couche(s) composite(s).

10. Câble d'énergie et/ou de télécommunication comprenant au moins un élément conducteur allongé et au moins une couche composite électriquement isolante entourant ledit élément conducteur allongé, **caractérisé en ce que** la couche composite électriquement isolante comprend au moins un amidon, au moins un plastifiant de l'amidon et au moins un matériau cimentaire, et **en ce que** :
- le matériau cimentaire est un ciment géopolymère ou est issu d'un mélange constitué d'un ciment anhydre conventionnel et d'eau ou d'un mélange constitué d'un silicate de magnésium, d'un silicate alcalin, d'une base alcaline et d'eau, et
- l'amidon et le plastifiant de l'amidon représentent de 50 à 90% en masse, par rapport à la masse totale de ladite couche composite électriquement isolante.

11. Procédé de fabrication d'un câble tel que défini à l'une quelconque des revendications 1 à 10, **caractérisé en ce qu'**il comprend au moins les étapes suivantes :
i) une étape de préparation d'une composition composite comprenant au moins une composition cimentaire, au moins un amidon et au moins un plastifiant de l'amidon, ladite composition cimentaire étant une composition géopolymère, un mélange constitué d'un ciment anhydre conventionnel et d'eau, ou un mélange constitué d'un silicate de magnésium, d'un silicate alcalin, d'une base alcaline et d'eau,
ii) une étape d'application de la composition composite obtenu à l'étape i), autour d'au moins un élément conducteur allongé,
iii) une étape de durcissement de la composition composite, pour former la couche composite électriquement isolante.

12. Procédé selon la revendication 11, **caractérisé en ce que** la composition cimentaire de l'étape i) comprend de l'eau, du silicium (Si), de l'aluminium (Al) ou du magnésium (Mg), de l'oxygène (O), et au moins un élément choisi parmi le potassium (K), le sodium (Na), le lithium (Li), le césium (Cs) et le calcium (Ca).

13. Procédé selon la revendication 11 ou 12, **caractérisé en ce que** la composition cimentaire est une composition géopolymère aluminosilicate.

14. Procédé selon l'une quelconque des revendications 11 à 13, **caractérisé en ce que** l'étape i) est effectuée en préparant séparément une composition d'amidon selon une étape i-1) et une composition cimentaire selon une étape i-2), puis en mélangeant les deux compositions selon une étape i-3), afin de former la composition composite.

15. Procédé selon l'une quelconque des revendications 11 à 14, **caractérisé en ce que** l'étape ii) est effectuée par extrusion à chaud de ladite composition composite.

## Patentansprüche

1. Energie- und/oder Telekommunikationskabel, umfassend mindestens ein längliches leitendes Element und mindestens eine elektrisch isolierende Kompositschicht, die das längliche leitende Element umgibt, **dadurch gekennzeichnet, dass** die elektrisch isolierende Kompositschicht mindestens eine Stärke, mindestens einen Weichmacher der Stärke und mindestens ein Zementmaterial umfasst, und dass:
- das Zementmaterial ein Geopolymerzement ist oder aus einem Gemisch hervorgegangen ist, das aus einem konventionellen wasserfreien Zement und Wasser besteht oder einem Gemisch, das aus einem Magnesiumsilikat, einem alkalischen Silikat, einer alkalischen Base und Wasser besteht, und
- das Zementmaterial 10 bis 50 Ma% in Bezug auf die Gesamtmasse der elektrisch isolierenden Kompositschicht darstellt.

2. Kabel nach Anspruch 1, **dadurch gekennzeichnet, dass** das Zementmaterial Silicium (Si), Aluminium (Al) oder Magnesium (Mg), Sauerstoff (O) und mindestens ein Element umfasst, das aus Kalium (K), Natrium (Na), Lithium (Li), Cäsium (Cs) und Calcium (Ca) ausgewählt ist.

3. Kabel nach Anspruch 1 oder 2, **dadurch gekennzeichnet, dass** das Zementmaterial ein geopolymerer Aluminosilikatzement ist.

4. Kabel nach einem der vorangehenden Ansprüche, **dadurch gekennzeichnet, dass** die elektrisch isolierende Kompositschicht eine Dicke von 0,5 bis 5 mm aufweist.

5. Kabel nach einem der vorangehenden Ansprüche, **dadurch gekennzeichnet, dass** die Stärke eine native Stärke oder eine modifizierte Stärke ist.

6. Kabel nach einem der vorangehenden Ansprüche, **dadurch gekennzeichnet, dass** der Weichmacher der Stärke ein Metallstearat, ein Polyethylenglycol, ein Ethylenglycol, ein Polyol, eine Sucrose, ein Weichmacher, der Amingruppen enthält, jederTyp von Weichmacher auf der Basis von modifiziertem/n Polysaccharid(en) oder ein Gemisch davon ist.

7. Kabel nach einem der vorangehenden Ansprüche, **dadurch gekennzeichnet, dass** die Stärke und der Weichmacher der Stärke 50 bis 90 Ma% in Bezug auf die Gesamtmasse der elektrisch isolierenden Kompositschicht darstellen.

8. Kabel nach einem der vorangehenden Ansprüche, **dadurch gekennzeichnet, dass** die elektrisch isolierende Kompositschicht eine innere Schicht des Kabels ist.

9. Kabel nach einem der vorangehenden Ansprüche, **dadurch gekennzeichnet, dass** es ferner eine äußere Schutzhülle umfasst, die die Kompositschicht(en) umgibt.

10. Energie- und/oderTelekommunikationskabel, umfassend mindestens ein längliches leitendes Element und mindestens eine elektrisch isolierende Kompositschicht, die das längliche leitende Element umgibt, **dadurch gekennzeichnet, dass** die elektrisch isolierende Kompositschicht mindestens eine Stärke, mindestens einen Weichmacher der Stärke und mindestens ein Zementmaterial umfasst, und dass:
- das Zementmaterial ein Geopolymerzement ist oder aus einem Gemisch hervorgegangen ist, das aus einem konventionellen wasserfreien Zement und Wasser besteht oder einem Gemisch, das aus einem Magnesiumsilikat, einem alkalischen Silikat, einer alkalischen Base und Wasser besteht, und
- die Stärke und der Weichmacher der Stärke 50 bis 90 Ma% in Bezug auf die Gesamtmasse der elektrisch isolierenden Kompositschicht darstellen.

11. Verfahren zur Herstellung eines Kabels nach einem der Ansprüche 1 bis 10, **dadurch gekennzeichnet, dass** es mindestens die folgenden Schritte umfasst:
i) einen Schritt des Herstellens einer Kompositzusammensetzung, die mindestens eine Zementzusammensetzung, mindestens eine Stärke und mindestens einen Weichmacher der Stärke umfasst, wobei die Zementzusammensetzung eine geopolymere Zusammensetzung, ein Gemisch, das aus einem konventionellen wasserfreien Zement und Wasser besteht oder ein Gemisch ist, das aus einem Magnesiumsilikat, einem alkalischen Silikat, einer alkalischen Base und Wasser besteht,
ii) einen Schritt des Auftragens der in Schritt i) erhaltenen Kompositzusammensetzung um mindestens ein längliches leitendes Element,
iii) einen Schritt des Härtens der Kompositzusammensetzung, um die elektrisch isolierende Kompositschicht zu bilden.

12. Verfahren nach Anspruch 11, **dadurch gekennzeichnet, dass** die Zementzusammensetzung von Schritt i) Wasser, Silicium (Si), Aluminium (Al) oder Magnesium (Mg), Sauerstoff (O) und mindestens ein Element umfasst, das aus Kalium (K), Natrium (Na), Lithium (Li), Cäsium (Cs) und Calcium (Ca) ausgewählt ist.

13. Verfahren nach Anspruch 11 oder 12, **dadurch gekennzeichnet, dass** die Zementzusammensetzung eine geopolymere Aluminosilikatzusammensetzung ist.

14. Verfahren nach einem der Ansprüche 11 bis 13, **dadurch gekennzeichnet, dass** der Schritt i) durch separate Herstellung einer Stärkezusammensetzung gemäß einem Schritt i-1) und einer Zementzusammensetzung gemäß einem Schritt i-2), dann durch Mischen der beiden Zusammensetzungen gemäß einem Schritt i-3), um die Kompositzusammensetzung zu bilden, durchgeführt wird.

15. Verfahren nach einem der Ansprüche 11 bis 14, **dadurch gekennzeichnet, dass** der Schritt ii) durch Warmextrusion der Kompositzusammensetzung durchgeführt wird.

## Claims

1. A power and/or telecommunications cable comprising at least one elongate conductive element and at least one composite electrically insulating layer surrounding said elongate conductive element, **characterized in that** the composite electrically insulating layer comprises at least one starch, at least one starch plasticizer and at least one cement material, and **in that**:
- the cement material is a geopolymer cement or is derived from a mixture composed of a conventional anhydrous cement and water, or from a mixture composed of a magnesium silicate, alkaline silicate, alkaline base and water; and
- the cement material represents from 10 to 50 weight % relative to the total weight of said composite electrically insulating layer.

2. The cable according to claim 1, **characterized in that** the cement material comprises silicon (Si), aluminium (Al) or magnesium (Mg), oxygen (O) and at least one element selected from among potassium (K), sodium (Na), lithium (Li), caesium (Cs) and calcium (Ca).

3. The cable according to claim 1 or 2, **characterized in that** the cement material is an aluminosilicate geopolymer cement.

4. The cable according to any of the preceding clams, **characterized in that** the composite electrically insulating layer has a thickness ranging from 0.5 to 5 mm.

5. The cable according to any of the preceding claims, **characterized in that** the starch is a native starch or modified starch.

6. The cable according to any of the preceding claims, **characterized in that** the starch plasticizer is a metal stearate, polyethylene glycol, ethylene glycol, polyol, sucrose, a plasticizer containing amide groups, any type of plasticizer containing modified polysaccharide(s) or one of the mixtures thereof.

7. The cable according to any of the preceding claims, **characterized in that** the starch and the starch plasticizer represent from 50 to 90 weight %, relative to the total weight of said composite electrically insulating layer.

8. The cable according to any of the preceding claims, **characterized in that** the composite electrically insulating layer is an inner layer of the cable.

9. The cable according to any of the preceding claims, **characterized in that** it further comprises an outer protective sheath surrounding the composite layer(s).

10. Power and/or telecommunications cable comprising at least one elongate conductive element and at least one composite electrically insulating layer surrounding said elongate conductive element, **characterized in that** the composite electrically insulating layer comprises at least one starch, at least one starch plasticizer and at least one cement material, and **in that**:
- the cement material is a geopolymer cement or is derived from a mixture composed of a conventional anhydrous cement and water, or from a mixture composed of a magnesium silicate, alkaline silicate, alkaline base and water; and
- the starch and the starch plasticizer represent from 50 to 90 weight % relative to the total weight of said composite electrically insulating layer

11. A method for manufacturing a cable such as defined in any of claims 1 to 10, **characterised in that** it comprises at least the following steps:
i) a step to prepare a composite composition comprising at least one cement composition, at least one starch and at least one starch plasticizer, said cement composition being a geopolymer composition, a mixture composed of a conventional anhydrous cement and water, or a mixture composed of a magnesium silicate, alkaline silicate, alkaline base and water;
ii) a step to apply the composite composition obtained at step i) around at least one elongate conductive element;
iii) a step to set the composite composition to form the composite electrically insulating layer.

12. The method according to claim 11, **characterized in that** the cement composition of step i) comprises water, silicon (Si), aluminium (Al) or magnesium (Mg), oxygen (O) and at least one element selected from among potassium (K), sodium (Na), lithium (Li), caesium (Cs) and calcium (Ca).

13. The method according to claim 11 or 12, **characterized in that** the cement composition is an aluminosilicate geopolymer composition.

14. The method according to any of claims 11 to 13, **characterized in that** step i) is conducted by separately preparing a starch composition at a step i-1) and a cement composition at a step i-2), then mixing the two compositions at a step i-3) to form the composite composition.

15. The method according to any of claims 11 to 14, **characterized in that** step ii) is conducted via hot extrusion of said composite composition.
